## Europäisches Patentamt

## European Patent Office

## Office européen des brevets

(11) Veröffentlichungsnummer: **0 082 884 B1**

(19)

(11) Veröffentlichungsnummer: **0 082 884 B1**

# EUROPÄISCHE PATENTSCHRIFT

(12)

(45) Veröffentlichungstag der Patentschrift:
**14.05.86**

(21) Anmeldenummer: **81110778.8**

(22) Anmeldetag: **24.12.81**

(51) Int. Cl.⁴: **G 01 M 1/04, F 16 C 27/00**

(54) **Lagerung für eine Auswuchtmaschine zum Auswuchten von elastischen Rotoren.**

(43) Veröffentlichungstag der Anmeldung:
**06.07.83 Patentblatt 83/27**

(45) Bekanntmachung des Hinweises auf die Patenterteilung:
**14.05.86 Patentblatt 86/20**

(84) Benannte Vertragsstaaten:
**DE GB**

(56) Entgegenhaltungen:
**CH - A - 409 536**
**DE - A - 2 942 379**
**DE - B - 2 141 502**
**DE - B - 2 208 422**

(73) Patentinhaber: **CARL SCHENCK AG,**
**Landwehrstrasse 55 Postfach 40 18, D-6100 Darmstadt (DE)**

(72) Erfinder: **Giers, Alfred, Dipl.-Ing., Messeler Weg 12, D-6101 Rossdorf (DE)**
Erfinder: **Helland, Manfred, Dipl.-Ing., Mittermayerstrasse 1c, D-6100 Darmstadt-Neu-Kranichstein (DE)**

(74) Vertreter: **Dallhammer, Herbert, Dipl.-Ing., CARL SCHENCK AG Patentabteilung Postfach 4018 Landwehrstrasse 55, D-6100 Darmstadt (DE)**

EP 0 082 884 B1

## Beschreibung

Die Erfindung betrifft eine Lagerung für die Auswuchtmaschine zum Auswuchten von elastischen Rotoren, mit Lagerköpfen für die Lagerzapfen des elastischen Rotors, einem Fundament zur Abstützung der Lagerköpfe und zusätzlichen Krafterzeugern zum Einleiten von veränderbaren Abstützkräften in die Lagerung.

Bei Auswuchtmaschinen für elastische Rotoren besteht das Problem, dass die Eigenfrequenzen der Einheit elastischer Rotor und Lagerständer auch von der Lagersteifigkeit der Auswuchtmaschinenlagerung abhängig sind. Es besteht daher der Wunsch, die Lagersteifigkeit möglichst einfach in weiten Bereichen zu verstellen.

Hierzu ist eine im wesentlichen starre Umlaufkörperlagerung (DE-B-21 41 502) mit Abstützung jeder Lagerstelle durch ein Federstabsystem, das in einer senkrecht zur Lagerhauptachse durch den Lagermittelpunkt verlaufenden Ebene angeordnet ist und aus zug-, druck-, und knickstarren, aber in einem oder mehreren Abschnitten biegeweichen Federstäben besteht, welche das Lagergehäuse gegen Drehbewegung um die Lagerhauptachse sichern und in allen radialen Richtungen gleichmässig hart gegen das Maschinenfundament abstützen, andererseits aber Taumelbewegungen der Umlaufkörperrotationsachse um zwei zueinander senkrechte Querachsen durch den Mittelpunkt der Stützstelle zulassen, bekannt geworden, die sich dadurch auszeichnet, dass zur Verstimmung des schwingungsfähigen Systems ‹Prüfkörper plus Lagerständer› eine zusätzliche Vorrichtung vorgesehen ist dergestalt, dass zusätzliche Stützen auf der einen Seite mit dem Maschinenfundament kraft- und formschlüssig fest verankert sind, am anderen Ende über eine fernsteuerbare, die Taumelbewegungen des Lagergehäuses möglichst wenig behindernde Reibverbindung zur zeitweisen Verstimmung mit dem Lagergehäuse verbunden sind. Eine derartige Auswuchtmaschinenlagerung lässt zwar eine Einstellung der Federsteifigkeit dieser Lagerung zu, sie ist jedoch nicht geeignet, direkt auf die von dem zu untersuchenden Rotor ausgehenden Beanspruchung zu reagieren, auch wenn, wie in dieser Schrift offenbart, eine Fernsteuerung für eine dort vorgesehene Reibverbindung angeordnet ist. Sie ist auch nicht geeignet, stufenlos wählbare Werte der Federsteifigkeit und Dämpfung zu erreichen.

Ausgehend hiervon, liegt der Erfindung die Aufgabe zugrunde, für die Prüfung elastischer Rotoren, insbesondere auf deren Auswuchtgüte, die Lagersteifigkeit und gegebenenfalls auch Dämpfung einer Auswuchtmaschinenlagerung in weiten Bereichen zu verändern. Diese Aufgabe wird erfindungsgemäss dadurch gelöst, dass zur Bestimmung der Bewegung von Lagerkopf und/oder Lagerzapfen mindestens eine Bewegungs-Messvorrichtung je gelagertem Lagerzapfen vorgesehen ist, dass das Messsignal der mindestens einen Bewegungs-Messvorrichtung mindestens einen Signalumformer beaufschlagt, dessen Ausgangssignal dem mindestens einen Krafterzeuger zugeführt ist, der dem Schwingweg und/oder der Geschwindigkeit von Lagerkopf und/oder Lagerzapfen entsprechende Kräfte in vorgegebener Proportionalität an den Lagerköpfen und/oder Lagerzapfen induziert.

Die der Erfindung zugrundeliegende Aufgabe lässt sich auch dadurch lösen, dass zur Bestimmung der Bewegungen von Lagerkopf und/oder Lagerzapfen mindestens eine Abstützkraft-Messvorrichtung je gelagertem Lagerzapfen vorgesehen ist, dass das Messsignal der mindestens einen Abstützkraft-Messvorrichtung mindestens einen Signalumformer beaufschlagt, dessen Ausgangssignal dem mindestens einen Krafterzeuger zugeführt ist, der dem Schwingweg und/oder der Geschwindigkeit von Lagerkopf und/oder Lagerzapfen entsprechende Kräfte in vorgegebener Proportionalität an den Lagerköpfen und/oder Lagerzapfen induziert.

Diese erfinderischen Lösungen der Aufgabe beschreiben eine aktive Auswuchtmaschinenlagerung, bei der, ausgehend von den Wirkungen des zu untersuchenden elastischen Rotors, die auf Messumformer einwirken, eine Regelung und eine Steuerung von Gegenwirkungen ermöglicht wird, um die Auswuchtgüte eines zu untersuchenden elastischen Rotors, unabhängig von einer vorgegebenen Lagersteifigkeit, festzustellen, und in weiten Grenzen wählbare Feder- und Dämpfungscharakteristik der Abstützung zu erreichen. Damit ist es möglich, zum einen einen von den Lagerbedingungen weitgehend unabhängigen Auswuchtzustand zu erreichen, zum anderen gefährliche Zustände bei Resonanznäherung oder Instabilitäten zu vermeiden; weiterhin sind prinzipielle Untersuchungen über das Rotorverhalten bei veränderlichen Lagereigenschaften möglich.

Als Messvorrichtung für die Bewegung von Lagerkopf und/oder Lagerzapfen lassen sich Absolut- und Relativ-Aufnehmer gleich gut verwenden, die die Messwerte für die Bewegung aus dem Weg, aus der Geschwindigkeit oder aus der Beschleunigung des Lagerkopfes und/oder des Lagerzapfens ableiten. Messvorrichtungen zum Bestimmen der Kraftwirkungen werden als Relativaufnehmer wie Dehnungsmessstreifen, oder der Öldruck verwendet. Zur gleichzeitigen Bestimmung der Messwerte von Lagerkopf und Lagerzapfen werden gemäss der Erfindung bevorzugt die Messwerte des Lagerzapfens gegen den Lagerkopf mit Wellenschwingungsaufnehmern gemessen und die Messwerte für den Lagerkopf absolut bestimmt.

Die so erhaltenen Messwerte werden einem Signalumformer zugeführt, der nun entsprechend Kräfte in vorgegebener Proportionalität erzeugt. Hierbei können die rückwirkenden Kräfte absolut wirken, das heisst am Lagerkopf befestigt sein, wenn es sich hierbei um rotierende oder oszillierende Rüttler handelt, oder sie können als relativ wirkende Kräfte auftreten, wenn Hydraulikkolben, Piezo-Rüttler oder magnetostriktive Rüttler eingesetzt werden. Werden Magnet-Rüttler eingesetzt, so können sie auch am Lagerzapfen wirkend angeordnet werden. Die erfindungsgemässe Auswuchtmaschinenlagerung gestattet also, sowohl die Lagersteifigkeit in Abhängigkeit des zu untersuchenden Rotors als auch deren Dämpfung gemeinsam oder einzeln zu regeln. Damit wird auch erreicht, dass kritische Zustände, die beim Hochfahren bis zur Messdrehzahl oder bei der Messdrehzahl selbst durch Resonanzerscheinungen zwischen dem zu untersuchenden Rotor und der Lagerung oder durch Erreichen der kritischen Drehzahl des Rotors ausgelöst werden, in dem Masse sofort beeinflussbar sind, dass eine Zerstörung der Auswuchtmaschinenlagerung eindeutig vermieden wird.

In der nachfolgenden Zeichnung wird die Erfindung an einer schematisch dargestellten Auswuchtmaschinenlagerung für eine Lagerstelle eines zu untersuchenden elastischen Rotors näher erläutert. Die Erfindung ist jedoch nicht eingeschränkt auf die im Ausführungsbeispiel dargestellte einzige Lagerstelle, da bei einer Mehrfachlagerung des zu untersuchenden elastischen Rotors die anderen Lagerstellen in derselben Weise ausgeführt sind. Auch lässt sich die erfindungsgemässe Regelung der Vorgänge mit allen genannten absolut und relativ wirkenden Messvorrichtungen und allen absolut und relativ wirkenden Krafterzeugern durchführen, wenn beispielsweise der Aufnehmer selbst, oder im Zusammenwirken mit einer Lagerung, die Bewegung des zu untersuchenden wellenelastischen Rotors zu messen ermöglicht.

Im Ausführungsbeispiel wird darüber hinaus nur die Bewegung eines Lagerkopfes mittels einer Messvorrichtung und Weiterverarbeitung der dort gewonnenen Signale näher erläutert, jedoch nicht die Bewegung eines Lagerzapfens allein oder im Zusammenhang mit der Messung der Bewegung des Lagerkopfes.

An einem Lagerkopf 1, in dem ein Lagerzapfen 2 gelagert ist, sind eine erste Messvorrichtung 3 und eine zweite Messvorrichtung 4 angeordnet. Im vorliegenden Fall wird angenommen, dass es sich hierbei um absolut wirkende Messvorrichtungen handelt. Der Lagerkopf 1 selbst ist über Federn 5, 6 mit einem Fundament 7 verbunden. Bei dem Fundament kann es sich um das Lagerbett einer nicht dargestellten Auswuchtmaschine handeln.

Bei Rotation des Lagerzapfens 2 erzeugt die erste Messvorrichtung 3 und die zweite Messvorrichtung 4 Messsignale, die zeitlich veränderlich durch Rotation des Rotationskörpers sind. Die Messsignale können aber auch einen konstanten Anteil enthalten, wenn Wegaufnehmer verwendet werden, die auch auf statische Verlagerungen reagieren.

Über Messleitung 8, 9 werden die von der ersten Messvorrichtung 3 und der zweiten Messvorrichtung 4 kommenden Signale einem Signalumformer und Regler 10 zugeführt. Hier können ggf. die Signale durch Integration oder Differentiation nach der Zeit beeinflusst werden, so dass z.B. weg- und geschwindigkeitsproportionale Signale parallel vorliegen. Statt dessen kann aber auch jede Messvorrichtung – wie im Bild gezeigt – zwei Systeme enthalten, die parallel geschwindigkeits- und wegproportional Signale abgeben. Im Signalumformer und Regler werden weiterhin, falls gewünscht, Signale von mehreren Messvorrichtungen gemischt, um wünschenswerte Effekte zu erzielen.

Die so gewonnenen Signale stellen im wesentlichen die Istwerte der Wege und/oder Geschwindigkeit an den Messstellen dar. Die Signale werden nunmehr einem Regler zugeführt und mit Sollwerten 11, 12 z.B. für Weg ($u = 0$; $v = 0$) und Geschwindigkeit ($u = 0$; $v = 0$) verglichen. Die Differenz zwischen Ist- und Sollwerten – falls gewünscht – multipliziert mit einem Proportionalitätsfaktor wird dann nach üblichen Gesetzen der Regeltechnik über Steuerleitungen 13, 14, Hydraulikvorrichtungen 15, 16, die zueinander orthogonal angeordnet sind, zugeführt. In den Steuerleitungen 13, 14 sind die Informationen über die gewünschte Dämpfung und die Steifigkeit (z.B. weg- bzw. geschwindigkeitsproportionaler Signalanteil) enthalten, so dass die Hydraulikvorrichtungen 15, 16 wahlweise mit proportionaler Steifigkeit und/oder proportionaler Dämpfung beaufschlagt werden können. Die Hydraulikvorrichtungen 15, 16 stützen sich als Relativ-Krafterzeuger gegen eine Abstützung 17 bzw. 18 an, wobei es natürlich möglich ist, dass diese Abstützung 17 bzw. 18 gleichzeitig das Auswuchtmaschinenbett darstellt. Durch Steuerventile 20, 21 wird der nicht dargestellte Ölzufluss entsprechend beeinflusst. Anstelle der Abstützung 17 bzw. 18 können Absolut-Krafterzeuger, wie sie von rotierenden Rüttlern oder oszillierenden Rüttlern dargestellt werden, am Lagerkopf 1 direkt angeordnet sein. Hierzu ist dann lediglich die Steuerleitung 13. bzw.14 an den entsprechenden Rüttler anzuschliessen.

Bei Verwendung der Hydraulikvorrichtungen 15,16 ist es als eine erfinderische Ausgestaltung anzusehen, dass dort extrem kurzhubige, dickwandige Zylinder eingesetzt werden, die selbst sehr steif abgestützt werden. Dadurch wird eine extrem hohe Ölfedersteifigkeit erreicht, so dass sowohl die Steifigkeit als auch die Dämpfung des Lagerkopfes 1 sich praktisch linear einstellen lässt.

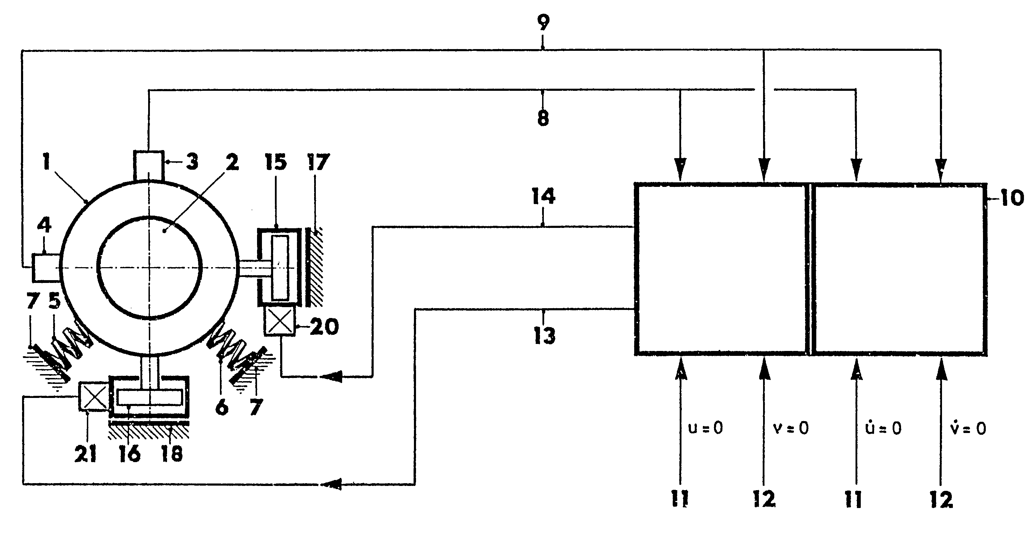

**Patentansprüche**

1. Lagerung für eine Auswuchtmaschine zum Auswuchten von elastischen Rotoren, mit Lagerköpfen (1) für die Lagerzapfen (2) des elastischen Rotors, einem Fundament (7) zur Abstützung der Lagerköpfe (1) und zusätzlichen Krafterzeugern (15, 16) zum Einleiten von veränderbaren Abstützkräften in die Lagerung, dadurch gekennzeichnet, dass zur Bestimmung der Bewegungen von Lagerkopf (1) und/oder Lagerzapfen (2) mindestens eine Bewegungs-Messvorrichtung (3 bzw. 4) je gelagertem Lagerzapfen (2) vorgesehen ist, dass das Messsignal der mindestens einen Bewegungs-Messvorrichtung (3 bzw. 4) mindestens einen Signalumformer (10) beaufschlagt, dessen Ausgangssignal dem mindestens einen Krafterzeuger (15 bzw.16) zugeführt ist, der dem Schwingweg und/oder der Geschwindigkeit von Lagerkopf und/oder Lagerzapfen entsprechende Kräfte in vorgegebener Proportionalität an den Lagerköpfen (1) und/oder Lagerzapfen (2) induziert.

2. Lagerung für eine Auswuchtmaschine zum Auswuchten von elastischen Rotoren, mit Lagerköpfen (1) für die Lagerzapfen (2) des elastischen Rotors, einem Fundament (7) zur Abstützung der Lagerköpfe (1) und zusätzlichen Krafterzeugern (15, 16) zum Einleiten von veränderbaren Abstützkräften in die Lagerung, dadurch gekennzeichnet, dass zur Bestimmung der Bewegungen von Lagerkopf (1) und/oder Lagerzapfen (2) mindestens eine Abstützkraft-Messvorrichtung (3 bzw. 4) je gelagertem Lagerzapfen (2) vorgesehen ist, dass das Messsignal der mindestens einen Abstützkraft-Messvorrichtung (3 bzw. 4) mindestens einen Signalumformer (10) beaufschlagt, dessen Ausgangssignal dem mindestens einen Krafterzeuger (15 bzw. 16) zugeführt ist, der dem Schwingweg und/oder der Geschwindigkeit von Lagerkopf und/oder Lagerzapfen entsprechende Kräfte in vorgegebener Proportionalität an den Lagerköpfen (1) und/oder Lagerzapfen (2) induziert.

## Claims

1. A bearing arrangement for a balancing machine for balancing elastic rotors, having head bearings (1) for the journals (2) of the elastic rotor, a bed (7) to support the head bearings (1) and additional force generators (15, 16) for the introduction of variable supporting forces into the bearing arrangement, characterised in that at least one movement measuring instrument (3 and/or 4) is provided for each mounted journal (2) to determine the movements of head bearing (1) and/or journal (2), that the measurement signal of the at least one movement measuring instrument (3 and/or 4) acts on at least one signal converter (10), the output signal of which is fed to the at least one force generator (15 and/or 16) which induces forces corresponding to the oscillatory displacement and/or the velocity of head bearing and/or journal, in preset proportionality, at the head bearings (1) and/or journals (2).

2. A bearing arrangement for a balancing machine for balancing elastic rotors, having head bearings (1) for the journals (2) of the elastic rotor, a bed (7) to support the head bearings (1) and additional force generators (15, 16), for the introduction of variable supporting forces into the bearing arrangement, characterised in that at least one supporting-force measuring instrument (3 and/or 4) is provided for each mounted journal (2) to determine the movements of head bearing (1) and/or journal (2), that the measurement signal of the at least one supporting-force measuring instrument (3 and/or 4) acts on at least one signal converter (10), the output signal of which is fed to the at least one force generator (15 and/or 16) which induces forces corresponding to the oscillatory displacement and/or the velocity of head bearing and/or journal, in preset proportionality, at the head bearings (1) and/or journals (2).

## Revendications

1. Monture pour machine d'équilibrage destinée au débalourdage de rotors élastiques, comprenant des têtes de montage (1) pour les tourillons (2) du rotor élastique, une semelle (7) pour le support des têtes de montage (1), et des générateurs de force additionnels (15, 16) pour appliquer des forces d'appui variables à la monture, caractérisée en ce que pour déterminer les mouvements de la tête de montage (1) et/ou du tourillon (2), on prévoit au moins un dispositif de mesure de mouvement (3 ou 4) pour chaque tourillon supporté, en ce que le signal de mesure d'au moins un dispositif de mesure de mouvement (3 ou 4) est appliqué à au moins un transducteur de signaux (10) dont le signal de sortie est appliqué à au moins un générateur de force (15 ou 16) qui induit dans les têtes de montage (1) et/ou les tourillons (2) des forces correspondant au parcours des oscillations et/ou à la vitesse de la tête de montage et/ou des tourillons selon un proportionnalité prédéterminée.

2. Monture pour machine d'équilibrage destinée au débalourdage de rotors élastiques, comprenant des têtes de montage (1) pour les tourillons (2) du rotor élastique, une semelle (7) pour le support des têtes de montage (1) et des générateurs de force additionnels (15, 16) pour appliquer des forces d'appui variables à la monture, caractérisée en ce que pour déterminer les mouvements de la tête de montage (1) et/ou du tourillon (2), on prévoit au moins un dispositif de mesure de la force d'appui (3 ou 4) pour chaque tourillon (2) monté sur le dispositif, en ce que le signal de mesure d'au moins un dispositif de mesure de la force d'appui (3 ou 4) est appliqué à au moins un transducteur de signaux (10) dont le signal de sortie est appliqué à au moins un générateur de force (15 ou 16) qui induit dans les têtes de montage (1) et/ou les tourillons (2) des forces correspondant au parcours des oscillations et/ou à la vitesse de la tête de montage et/ou des tourillons selon une proportionnalité prédéterminée.

0 082 884